# EUROPEAN PATENT SPECIFICATION

(11) **EP 3 818 834 B1**
(45) Date of publication and mention of the grant of the patent: **21.08.2024**
(21) Application number: 19208068.7
(22) Date of filing: 08.11.2019
(51) Int. Cl.: A23G 1/40, A23G 1/46

(54) **FAT BASED CONFECTIONERY**
SÜSSWARE AUF FETTBASIS
PRODUIT DE CONFISERIE À BASE DE GRAISSE

(43) Date of publication of application: 12.05.2021
(73) Proprietor: Société des Produits Nestlé S.A., 1800 Vevey (CH)
(72) Inventor: FORNY, Laurent, 1000 LAUSANNE 26 (CH); FRIES, Lennart, 1092 BELMONT-SUR-LAUSANNE (CH); KUSCHEL, Beatrice, YORK, YO10 4FE (GB); LE REVEREND, Benjamin, Jean, Didier, KIRKWOOD, Missouri 63122 (US); LIMA, Anthony, 25370 LES HÔPITAUX NEUFS (FR); MEUNIER, Vincent, Daniel, Maurice, 1066 EPALINGES (CH)
(74) Representative: Slaven, John William

(56) References cited:
- WO-A1-2016/208637
- WO-A2-02/49452
- GB-A- 823 556
- US-A- 5 709 903
- US-A1- 2017 273 333
- US-A1- 2019 037 876
- US-B1- 6 548 099

## Description

### Field of the invention

The present invention relates to fat based confectionery material comprising at least 25% non-fat milk solids on a dry weight basis wherein at least 20% of the non-fat milk solids are in the form of crystallized or partially crystallized milk powder, preferably chocolate products.

### Background of the invention

Any discussion of the prior art throughout the specification should in no way be considered as an admission that such prior art is widely known or forms part of common general knowledge in the field.

The increasing interest in reduced sugar intake in the diet by health conscious consumers has led to a strong demand for food products with lower sugars. Sugar, however, is a key food ingredient that in addition to imparting natural sweetness to food products also functions to provide bulk and therefore plays a significant role in the structure, volume and mouthfeel of the finished food product.

Sugar is a naturally occurring sweetener that as aforementioned provides the sweetness in food products that consumers crave but is also highly calorific and so there is an important need for healthier, non-caloric or low-caloric sweetener alternatives. There have been many approaches that are well known in the art, involving the replacement or reduction of sugars in food products, such as using artificial sweeteners to replace natural sugar. More particularly, for example, for fat based confectionery products such as chocolate, many attempts have been made to provide a substitute for sugar using reduced sugar alcohols or 'polyols. Other approaches have included using bulking agents such as, non or low-caloric fibres to replace sugar in chocolate compositions. These approaches however, have associated disadvantages, for instance, polyols are well known to have undesirable laxative effects and furthermore such artificial sweeteners are not well perceived by consumers who have a preference for clean label products. There are also certain disadvantages linked to the use of bulking agents to replace sugars in food products this is mainly the associated undesirable impact on sweetness usually a reduction in sweetness.

Thus, it is generally well known to those skilled in the art of food manufacturing that replacing or reducing sugar in a food composition usually negatively impacts the flavour, and other taste components. For instance, sugar replacers may be slower in onset of the sweetness perception and longer in duration compared to natural sugar and so therefore change the taste balance of a food composition.

In addition, sugar replacers may not deliver as sweet a taste as natural sugar and may also exhibit, metallic, cooling, astringent, liquorice-like, and bitter after tastes.

In a further example, applying the prior art solutions as aforementioned for fat based confectionery products may also result in similar disadvantages. For instance, using bulking agents such as fibres in chocolate compositions leads to bitter aftertastes and adds undesirable bulk to the mixture, resulting in an increase in the viscosity of the mixture. This in turn makes it difficult to carry out the standard post-processing of the mixture such as enrobing and moulding which are essential steps towards furnishing a finished chocolate product.

Additionally, sugar provides certain sensory and perception properties to products that are very hard to replicate with the above-mentioned sugar replacers. Hence, whilst the calorie content is reduced, the eating experience is often worsened. Proposed routes to overcome these issues often involve an increase in fat content, which offsets the potential health benefits.

There are a number of documents relating to milk powders in the art and their uses in foods and beverages. GB823556 relates to chocolate milk powders. US5709903 relates to fat-reduced confectionery. WO0249452 relates to flavour concentrates. US6548099 relates to amorphous lactose in milk powders. WO2016208637 relates to quick drying chocolate. US2017273333 relates to heat resistant chocolate. US2019037876 relates to non-hydrogenated chocolate.

There thus remains the problem of providing low calorie or reduced sugar alternatives to natural sugar which may be used in food products or confectionery products without having a detrimental impact on the sweetness perception and/or any of the above associated problems of the prior art solutions. Accordingly, there remains a need to find low calorie sugar replacers that can be used in a food product or confectionery compositions such as chocolate for example, which avoids the problems of loss or reduction in sweetness, bitter aftertastes and off-flavours and maintain organoleptic properties. Accordingly, there remains a need to provide low calorie sugar replacers that are "clean label" and more desirable to the consumer. It is thus desirable to provide a healthier, reduced calorie or reduced sugar alternative to natural sugar that may be used in food products or confectionery products wherein there is little or no negative impact on sweetness perception. There thus exists a need to solve one or more of the above-mentioned problems.

It is an object of the present invention to ameliorate at least one disadvantage of the prior art as aforementioned of previous reduced or low calorie sugar alternatives such as artificial sweeteners and/or bulk sugar replacers such as fibres.

### Summary of the invention

Accordingly, this need is solved by the features of the independent claims. The dependent claims further develop the central idea of the invention.

Thus, in a first aspect, the present invention relates to fat based confectionery material comprising at least 35 % non-fat milk solids on a dry weight basis wherein at least 20 % of the non-fat milk solids are in the form of crystallized or partially crystallized milk powder, wherein at least 50% of the lactose comprised within the crystallized or partially crystallized milk powder is crystalline.

It has been surprisingly found by the inventors that the particles for use in the present invention can be used to replace sugar (such as sucrose) in a food product for example without having a detrimental effect on the sweetness of the food product and also the organoleptic properties of the product. This is a key advantage of the present invention, the reduction in sugar content without any loss in organoleptic properties, for example, no associated significant clagginess (i.e. stickiness or tackiness).

In a further aspect of the present invention, the fat based confectionery product is chocolate.

In another aspect there is provided a use of the particles of the present invention as a bulk sugar replacer in a fat-based confectionery product.

Additionally, preferably the control of the particle size distribution contributes to matching the organoleptic properties of sugar, preferably by providing a sugar replacer with a smooth mouthfeel, i.e. no associated clagginess (i.e. stickiness or tackiness).

In a further aspect of the present invention there is provided a sugar replacement composition suitable for partial or whole replacement of sugar in fat-based confectionery.

Advantageously the particles of the present invention can be used as a natural low calorie sugar alternative. Thus, the present invention provides the reduction of sugar in food products without the need to use artificial sweeteners and/or conventionally known bulking agents.

### Detailed description of the invention and the preferred embodiments

As mentioned above, the present invention provides a fat based confectionery material comprising at least 35% non-fat milk solids on a dry weight basis wherein at least 20% of the non-fat milk solids are in the form of crystallized or partially crystallized milk powder and at least 50% of the lactose comprised within the crystallized or partially crystallized milk powder is crystalline.

In a preferred embodiment, the fat based confectionery material comprises at least 40%, at least 45%, or at least 50% non-fat milk solids on a dry weight basis based on the weight of the fat based confectionery.

In a preferred embodiment, the fat based confectionery material comprises less than 65%, less than 60%, less than 55%, less than 50%, or less than 45% non-fat milk solids on a dry weight basis. For example, at least 35% and less than 65%.

In a preferred embodiment, at least 30%, preferably at least 40%, preferably at least 50%, preferably at least 60%, preferably at least 70%, preferably at least 80%, and preferably at least 90% by weight of the non-fat milk solids are in the form of crystallized or partially crystallized milk powder. For example, at least 20wt.% and less than or equal to 100wt.%.

In a preferred embodiment, 100%, less than 99%, less than 95% or less than 90% by weight of the non-fat milk solids are in the form of crystallized or partially crystallized milk powder. For example, at least 20% and less than or equal to 100%.

In a preferred embodiment, the fat based confectionery material comprises at least 35% and less than 65% non-fat milk solids on a dry weight basis and at least 20wt.% and less than or equal to 100wt.% of the non-fat milk solids are in the form of crystallized or partially crystallized milk powder.

According to the present invention the term 'amorphous' as used herein is defined as being essentially free of crystalline material and should be interpreted in line with conventional understanding of the term.

In a preferred embodiment, the term "crystallized or partially crystallized milk powder" relates to a composition that comprises crystallized lactose. In an embodiment, the milk powder comprises greater than 25% by weight of lactose based on the weight of the milk powder, preferably greater than 30%, preferably greater than 40%, and preferably greater than 45% or 50%. In an embodiment, the milk powder comprises less than 75% by weight of lactose based on the weight of the milk powder, less than 70%, preferably less than 65% or less than 60%.

In a preferred embodiment, at least 60%, preferably at least 70%, preferably at least 80%, preferably at least 90%, and preferably at least 95% of the lactose comprised within the crystallized or partially crystallized milk powder is crystalline by weight of the lactose.

In a preferred embodiment, 100%, less than 99%, less than 95% or less than 90% of the lactose comprised within the crystallized or partially crystallized milk powder is crystalline by weight of the lactose. In a preferred embodiment, at least 50% and less than or equal to 100% of the lactose comprised within the crystallized or partially crystallized milk powder is crystalline by weight of the lactose.

In a preferred embodiment, the amount of crystalline material is measured using known techniques, such as X-ray diffraction or NMR. In a preferred embodiment, the crystallinity is measured using the NMR method defined in the examples section of this application.

In a preferred embodiment, the fat based confectionery material comprises at least 35% and less than 65% non-fat milk solids on a dry weight basis and at least 20wt.% and less than or equal to 100wt.% of the non-fat milk solids are in the form of crystallized or partially crystallized milk powder and, at least 50% and less than or equal to 100% of the lactose comprised within the crystallized or partially crystallized milk powder is crystalline by weight of the lactose.

In a preferred embodiment, the crystallized or partially crystallized milk powder is a full fat milk powder, semi-skimmed milk powder, and/or skimmed milk powder, preferably skimmed milk powder. The skimmed milk may have a fat content below 1.5% on a dry weight basis, for example below 1.2%.

The milk powder particles for use in the invention may have a moisture content between 0.5 and 6%, for example between 1 and 5%, for further example between 1.5 and 3%.

In a preferred embodiment, the crystallized or partially crystallized milk powder is prepared using a spray drying process, using a fluid bed process and/or a combination of the two steps. Preferably, the milk powder is prepared using a seed crystal, preferably crystalline lactose or a salt thereof, preferably a hydrate of lactose, preferably crystalline lactose monohydrate.

In a preferred embodiment of the present invention, less than 55 wt.% of the fat based confectionery material is amorphous or less than 50 wt.% of the fat based confectionery material is amorphous. In a preferred embodiment, less than 45wt.% of the fat based confectionery material is amorphous, less than 40wt.%, less than 35wt.%, less than 30wt.%, less than 25wt.%, less than 20wt.%, less than 15wt.% or less than 10wt.%. In an embodiment, 0wt.% or greater, greater than 1.0wt.%, greater than 2.0wt.% or greater than 2.5wt.% of the fat based confectionery material is amorphous.

In an embodiment, the amorphous content is measured according to the summation of the amorphous content of each component.

For example, the amorphous content may be defined based on the contents of any of the following components that are present: amorphous skimmed milk powder, amorphous sugar, and amorphous content of the crystalline milk powder of the present invention. In a preferred embodiment, the presence of any standard sucrose, milk fat, cocoa butter, cocoa mass, lecithin or vanillin is not taken into account when calculating the amorphous content.

As mentioned above, specifically, the particle size distribution of the present invention also provides an improvement in the organoleptic property of mouthfeel, in particular a lack of clagginess, without a loss in sweetness nor a gritty mouthfeel.

The D90 value is a common method of describing a particle size distribution. The D90 is the diameter where 90% of the mass of the particles in the sample have a diameter below that value. In the context of the present invention, the D90 by mass is equivalent to the D90 by volume. The D90 value may be measured for example by a laser light scattering particle size analyser. Other measurement techniques for particle size distribution may be used depending on the nature of the sample. For example, the D90 value of powders may conveniently be measured by digital image analysis (such as using a Camsizer XT) while the D90 value of particles comprised within a fat continuous material such as chocolate may be measured by laser light scattering. The above definitions and measurement methods apply generally to D10 (diameter where 10% of the mass of the particles in the sample have a diameter below that value) and D50 (diameter where 50% of the mass of the particles in the sample have a diameter below that value).

The below particle size distributions relate to the crystallized or partially crystallized milk powder for use in the present invention.

In a further aspect, the milk powder particles for use in the present invention have a D90 particle size greater than 75 microns, for example preferably greater than 95 microns, greater than 110 microns, for example greater than 115 microns or greater than 125 microns.

In a further aspect, the milk powder particles for use in the present invention have a D90 particle size less than 250 microns, for example preferably less than 220, preferably less than 195 microns, more preferably less than 175 microns, more preferably less than 165 microns, less than 155 microns, or less than 150 microns.

In a preferred embodiment, the milk powder particles for use in the present invention have a D90 particle size from 75 to 250 microns, preferably from 95 to 195 microns or preferably from 125 to 175 microns.

The milk powder particles for use in the present invention may have a D50 particle size of less than 120 microns, preferably less than 100 microns, more preferably less than 80, or even more preferentially less than 70 microns.

In a further aspect, the milk powder particles for use in the present invention have a D50 particle size greater than 20 microns, for example preferably greater than 25 microns, greater than 30 microns, for example greater than 45 microns or greater than 50 microns.

In a most preferred embodiment, the D50 particle size is between 20 and 120 microns, preferably between 30 and 70 microns.

The milk powder particles for use in the present invention may have a diameter D10 of less than 50 microns, preferably less than 40 microns, more preferably less than 35 microns, or even more preferentially less than 30 microns.

In a further aspect, the milk powder particles for use in the present invention have a D10 particle size greater than 5 microns, for example preferably greater than 10 microns, greater than 15 microns, for example greater than 20 microns.

In a most preferred embodiment, the D10 particle size is between 5 and 50 microns, preferably between 15 and 30 microns.

In an embodiment of the present invention, the breadth of the particle size distribution is optionally defined by the parameter (D90-D10), i.e. the difference between the D90 value and the D10 value in microns. This value is only positive. In an embodiment, the difference between D90 and D10 is between 50 and 150 microns, preferably between 70 and 130 microns, preferably between 85 and 130 microns, preferably between 100 and 120 microns.

In an embodiment of the present invention, the particle size distribution is optionally defined by the parameter (D90-D10)/D50, i.e. the difference between the D90 value and the D10 value in microns divided by the D50 value. In an embodiment, this value is between 0.2 and 3.25, preferably between 0.4 and 2.5, more preferably between 0.75 and 2.25 and more preferably between 1.25 and 2.20.

In an embodiment of the present invention, the content of particles having a particle size below 10 microns is less than 20% of the total number of particles, preferably less than 15%, more preferably less than 10% and most preferably less than 5%. In an embodiment, the content of particles having a particle size below 10 microns is between 0.25% and 20% or between 0.5% and 10%, preferably between 0.5% and 5%.

In a preferred embodiment, the above particle size distributions relate to the particles prior to any refining steps present in preparing the confectionery material, i.e. preferably relate to the particle sizes in isolation as a raw material. Of course, if any production step of the confectionery material does not impact the particle size, the above particle size distributions relate to the milk powder

In an embodiment, the invention provides a confectionery product wherein the particles have been refined. In the context of the present invention, the term "refined" refers to material, which has been subjected to a refining process to reduce the particle size of the material's solids. In the manufacture of fat-based confectionery products, processes such as roll refining, ball mill and air classifier milling are used to refine the confectionery mass.

In a preferred embodiment, preferably to arrive at the particle size distributions and/or specific surface area values for particles within the confectionery as described below, the process to prepare the confectionery material involves multiple refining steps, preferably at least two distinct steps, preferably at least three distinct steps and/or preferably less than six distinct steps. In a preferred embodiment, the degree of refining increases in each subsequent step. In a preferred embodiment, the degree of refining is defined as a decreased particle size, i.e. an increase in degree of refining leads to a decrease in particle size.

In a preferred embodiment, when using a roll refiner, the first refining step has a gap between 80 and 120 microns, preferably between 90 and 110 microns. In a preferred embodiment, the final refining step use a gap between 35 and 90 microns, preferably 45 to 75 microns. In a preferred embodiment, an intermediate refining step uses a gap of between 60 and 110 microns, preferably between 75 and 90 microns.

In a preferred embodiment, the speed of the refining, preferably roll refining, is controlled so not to be overly fast, preferably between 25 and 150 RPM (revolutions per minute), preferably 30 and 100 RPM and preferably between 40 and 75 RPM.

Without being bound by theory, the refining conditions of the present invention reduce the mechanical stress applied to particles and, accordingly, enables control of particle size and/or specific surface area such that the organoleptic properties are not prejudiced by the reduction in sugar.

In a preferred embodiment, the refining is carried out using a roll refiner, preferably a 2, 3 or 5 roll refiner or a combination of refiners (e.g. two 3 roll refiners or a 2 and a 5 roll refiner etc.).

In an embodiment, the confectionery product of the present invention comprises particles with a D90 particle size greater than 20 microns, for example preferably greater than 30 microns, greater than 35 microns, for example greater than 40 microns or greater than 45 microns.

In a further aspect, the confectionery product of the present invention comprises particles with a D90 particle size less than 150 microns, for example preferably less than 120 microns, preferably less than 90 microns, more preferably less than 85 microns, more preferably less than 75 microns, less than 65 microns, or less than 60 microns.

In a preferred embodiment, the confectionery product of the present invention comprises particles with a D90 particle size from 20 to 150 microns, preferably from 35 to 90 microns or preferably from 45 to 75 microns.

In an embodiment of the present invention, the confectionery product of the present invention comprises particles with a particle size below 10 microns is less than 45% of the total number of particles, preferably less than 42%, more preferably less than 40%, more preferably less than 35% and most preferably less than 32%. In an embodiment, the content of particles having a particle size below 10 microns is between 2.5% and 45%, between 5% and 45%, 10% and 45% or between 15% and 35%, preferably between 15% and 42%, between 15% and 36% or between 20% and 32%.

In an embodiment of the present invention, the confectionery product of the present invention comprises particles with a specific surface area less than 0.900 m²/g, preferably less than 0.875 m²/g, preferably less than 0.850 m²/g, preferably less than 0.825 m²/g, and preferably less than 0.800 m²/g.

In an embodiment, the confectionery product of the present invention comprises particles with a specific surface area greater than 0.300 m²/g, preferably greater than 0.350 m²/g, preferably greater than 0.400 m²/g, preferably greater than 0.450 m²/g, preferably greater than 0.500 m²/g, preferably greater than 0.550 m²/g, and preferably greater than 0.600 m²/g. For example, greater than 0.650 m²/g or greater than 0.700 m²/g

In a preferred embodiment, the confectionery product comprises particles with a specific surface area between 0.300 m²/g and 0.900 m²/g, and preferably between 0.400 m²/g and 0.850 m²/g.

The specific surface area is determined from the particle size distribution as measured by the method mentioned below based on the particle number distribution of the diameters using the assumptions of spherical particles and a density of 1 g/cm³.

In a preferred embodiment, the above particle sizes relate to all solid ingredients dispersed in the confectionery, preferably chocolate. Hence, in a preferred embodiment, the solid ingredients comprise or consist of sugar, milk powder, cocoa powder and/or combinations of the above.

In a preferred embodiment, the particle size of the confectionery was measured using the following technique, and is preferably the particle size distribution of solid ingredients dispersed in chocolate (e.g. sucrose, milk powder, cocoa powder), according to laser diffraction, preferably by means of a Mastersizer 2000 (Malvern Panalytical). For example, 0.2 g of the sample being tested is mixed in 20 ml of MCT oil at 40-50°C for 1h and, if necessary, the sample is placed in an ultrasonic bath for 2 minutes to disperse.

By preparing confectionery compositions, preferably chocolate compositions, with the above particle size distributions and/or specific surface area distributions the organoleptic properties, specifically pastiness/clagginess, may be controlled to be acceptable. It must be noted that this is in combination with a sugar reduction provided by the crystalline milk particles used in the invention, which also affords control in respect of pastiness/clagginess.

In view of the above, in a highly preferred embodiment, the confectionery material:
- comprises at least 30 % of the non-fat milk solids in the form of crystallized or partially crystallized milk powder,
- less than 55 wt.% of the fat based confectionery material is amorphous,
- comprises particles with a particle size below 10 microns is less than 45% of the total number of particles, and
- preferably a D90 of from 35 to 90 microns.

Generally, the fat based confectionery material, preferably milk chocolate compositions, of the present invention comprises at least 10.0% by weight, preferably at least 13.0% by weight, more preferably at least 15.0% by weight, and even more preferably at least 17.0% cocoa butter by weight of the composition.

The preferred maximum amount of cocoa butter present in the fat based confectionery material, preferably milk chocolate compositions, of the present invention is less than 35.0% by weight, preferably not more than 30.0% by weight, more preferably not more than 30.0% by weight, and most preferably not more than 25.0% cocoa butter by weight. For example, between 10.0wt.% and 35.0wt.% of the confectionery material.

Generally, the fat based confectionery material, preferably milk chocolate compositions, of the present invention comprises at least 10.0% by weight, preferably at least 13.0% by weight, more preferably at least 15.0% by weight, and even more preferably at least 17.0% cocoa mass by weight of the composition.

The preferred maximum amount of cocoa mass present in the fat based confectionery material, preferably milk chocolate compositions, of the present invention is less than 35.0% by weight, preferably not more than 30.0% by weight, more preferably not more than 30.0% by weight, and most preferably not more than 25.0% cocoa mass by weight. For example, between 10.0 wt.% and 35.0wt.% of the confectionery material.

Generally, the fat based confectionery material, preferably milk chocolate compositions, of the present invention comprises at least 1.0% by weight, preferably at least 1.3% by weight, more preferably at least 1.5% by weight, and even more preferably at least 1.7% milk fat by weight of the composition.

The preferred maximum amount of milk fat present in the fat based confectionery material, preferably milk chocolate compositions, of the present invention is less than 10.0% by weight, preferably not more than 7.5% by weight, more preferably not more than 6.0% by weight, and most preferably not more than 5.0% milk fat by weight. For example, between 1.0% and 10.0wt.% of the confectionery material. The milk fat may be added separately to the composition and/or be present in any milk-based product added, e.g. milk powder.

According to the present invention the term sugar as used herein refers to as is conventionally understood a sweet crystalline substance obtained from various plants, especially sugar cane and sugar beet, and used as a sweetener in food and drink. In the context of the present invention sugar is defined as and includes all mono, di and oligosaccharides for example sucrose, fructose, glucose, dextrose, galactose, allulose, maltose, high dextrose equivalent hydrolysed starch syrup, xylose, and combinations thereof. Accordingly, the sugar used within the invention may be selected from the group consisting of sucrose, fructose, glucose, dextrose, galactose, allulose, maltose, high dextrose equivalent hydrolysed starch syrup xylose, and any combinations thereof.

In the present invention, the aim is to reduce the sugar content of the fat based confectionery, however, the confectionery may still contain sugar (i.e. sugar not derived from the milk solids). In a preferred embodiment, the fat based confectionery comprises less than 30.0wt.% sugar, preferably less than 25.0wt.%, preferably less than 20wt.%, and preferably less than 15.0wt.%. For example, between 0.0wt.% and 30.0wt.%, preferably between 0.0wt.% and 20.0wt.%, and preferably between 0.0wt.% and 15.0wt.%.

According to the present invention the term bulking agent as used herein refers to as is conventionally understood a food additive that increases food volume or weight without impacting the utility or functionality of a food. In a particularly preferred embodiment of the present invention, the bulking agents for use in the present invention are low or non-calorific additives, which impart bulk and provide advantageously healthier alternatives to for example sugar.

According to conventional understanding bulking agents may be used to partially or completely replace high-caloric ingredients, such as sugar to prepare an edible formulation with a reduction in calories. Additionally, the bulking agents are useful as a source of soluble fibre to be incorporated into foods and, unlike sugar, are non-cariogenic.

According to the present invention the bulking agent may be selected from the group consisting of polyols (sugar alcohols for example isomalt, sorbitol maltitol, mannitol, xylitol, erythritol and hydrogenated starch hydrolysates) guar gum, psyllium husk, carnuba wax, glycerin, beta glucan, polysaccharides (such as starch or pectin for example), dietary fibres (including both insoluble and soluble fibres) , polydextrose, methylcellulose, maltodextrins, inulin, milk powder (for example skimmed milk powder), whey, demineralised whey powder, dextrins such as soluble wheat or corn dextrin (for example Nutriose^{®}), soluble fibre such as Promitor^{®} and any combination thereof.

In a preferred embodiment of the present invention the bulking agent may be selected from the group consisting of maltodextrins, milk powder (for example skimmed milk powder (SMP)), demineralised whey powder (DWP), soluble wheat or corn dextrin (for example Nutriose^{®}), polydextrose, soluble fibre such as Promitor^{®} and any combinations thereof.

In an embodiment of the present invention, amorphous sucrose may be present. In an embodiment, the amorphous sucrose is in the form of amorphous particles comprising sucrose, a bulking agent and optionally a surfactant. In an embodiment of the present invention, the amorphous particles of WO2017093309 or WO2017093309, herein incorporated by reference, may also be included in the fat based confectionery.

In an embodiment, the amorphous sucrose may be present in an amount of at least 10wt.% in the fat based confectionery, at least 15wt.% or at least 20wt.%.

In an embodiment, the amorphous sucrose may be present in an amount of less than 40wt.%, preferably less than 30wt.%, preferably less than 20wt.%, preferably less than 15wt.%, preferably less than 10wt.%, preferably less than 5wt.% or preferably 0wt.%.

In an embodiment, the amorphous sucrose is present in an amount of 0wt.% and less than 40wt.%, preferably in an amount of between 0wt.% and 10wt.%.

In a preferred embodiment, the amorphous particles for use in the present invention comprise sugar in the amount of 10 to 90%, preferably 15 to 90%, more preferably 20 to 85%, 25 to 75% or 20 to 45%. For example, between 20 and 40% or between 25 and 45%.

In an embodiment, the amorphous particles for use in present invention comprise a bulking agent or the bulking agent and surfactant in combination in the amount of 5 to 90%, preferably 10 to 85%, 15 to 80%, preferably 25 to 75% or 40 to 75%.

The amorphous particles of the invention may comprise (for example consist on a dry basis of) sucrose and skimmed milk, the sucrose being present at a level of at least 30% in the particles. The ratio of sucrose to skimmed milk may be between 0.5 to 1 and 2.5 to 1 on a dry weight basis, for example between 0.6 to 1 and 1.5 to 1 on a dry weight basis.

In an embodiment, the amorphous particles for use in the present invention comprise a surfactant in the amount of 0.5 to 15%, preferably 1 to 10%, more preferably 1 to 5%, even more preferentially 1 to 3%.

According to the present invention the surfactant may be selected from the group consisting of lecithin, whey proteins, milk proteins, sodium caseinate, lysolecithin, fatty acid salts, lysozyme, sodium stearoyl lactylate, calcium stearoyl lactylate, lauroyl arginate, sucrose monooleate, sucrose monostearate, sucrose monopalmitate, sucrose monolaurate, sucrose distearate, sorbitan monooleate, sorbitan monostearate, sorbitan monopalmitate, sorbitan monolaurate, sorbitan tristearate, PGPR, PGE and any combinations thereof.

In a preferred embodiment of the present invention, the surfactant may be sodium caseinate or lecithin.

It will be well understood in the art that in embodiments according to the present invention wherein the bulking agent is derived from milk powder such as skimmed milk powder or demineralised whey powder certain surfactants are inherently present.

Additionally, the present invention provides a method of manufacturing a fat based confectionery material comprising at least 25% non-fat milk solids on a dry weight basis, the method comprising mixing crystallized or partially crystallized milk powder with fat and optionally ingredients selected from the group consisting of cocoa liquor/mass, crystalline sugar, lecithin and combinations of these; refining the resulting mixture to reduce the particle size of the components; and mixing the refined mixture with further fat and optionally lecithin and liquefying.

In a preferred embodiment, provided is a method wherein the crystallized or partially crystallized milk powder is obtained by mixing amorphous spray-dried milk powder with water followed by heating and mixing the mixture at 55 to 90° C and then pulverizing the mixture.

Alternatively, cooling of concentrated milk while whilst gently agitating before spray drying. In a preferred embodiment, the non-fat milk solids are in the form of crystallized or partially crystallized milk powder for use in the present invention are prepared according to spray-drying methods as here below described.

In a preferred aspect of the present invention there is provided a process to prepare the crystallized or partially crystallized milk powder comprising the steps of:
preparing a mixture comprising milk powder, preferably skimmed, and water, and optionally a seed crystal, and
spraying and drying the mixture to form amorphous porous particles.

In a preferred embodiment, no gas is added during the production process. Specifically, no gas is added before the mixture has been pressurised and no gas is added after the mixture is pressurised. The gas may be selected from the group consisting of nitrogen, air or carbon dioxide or any combination thereof.

In a preferred embodiment of the present invention, the milk powder and optionally a seed crystal may be mixed with more than 30% water (based on a total content by weight of the sugar, bulking agent, optionally surfactant and water), preferably more than 40% water and preferably less than 60% water until full dissolution is achieved.

The drying may be spray-drying, for example, the spraying and drying may be spray-drying.

In an embodiment, the drying is such that the particles have a moisture content of less than 5%, preferably between 1% and 5% (for example between 2% and 3%).

In a preferred embodiment of the present invention in order to aid the provision of the desired particle size distributions there is no recirculation of particles back into the drying chamber.

In an alternative embodiment it is plausible that other known procedures may be used to carry out the process of the present invention for example, foam drying, freeze drying, tray drying, fluid bed drying and the like.

According to the present invention, the fat based confectionery material is prepared according to conventional chocolate making processes as will be well known and obvious to a person skilled in the art.

The fat may for example be cocoa butter, cocoa butter equivalent or cocoa butter replacer. The fat may be cocoa butter. Some or all of the milk powder, cocoa liquor and crystalline sugar may be replaced by chocolate crumb. In a preferred embodiment, the liquefaction is carried out by conventional means well known to a person skilled in the art and refers to conching, a standard process in chocolate manufacture. In a preferred embodiment, 15 to 30% of the total fat present after liquefying is used in step (d).

In the present invention, the term bulk sugar replacer as used herein refers to a low or no calorie sugar substitute that can be substituted at a weight to weight and/or volume to volume basis for sugar.

Preferably, between 5 to 70% of sugar may be reduced or removed from a food product such as a fat based confectionery product.

In a preferred embodiment, fat content of the fat based confectionery product is greater than 15% by weight of the confectionery product, greater than 20%, or greater than 25%. In a preferred embodiment, fat content of the fat based confectionery product is less than 45% of the confectionery product, less than 40%, less than 35% or less than 30%. For example, between 15wt.% and 45wt.%.

### Fat based confectionery Materials

In an embodiment, compositions of the invention may usefully be chocolate products (as defined herein), more usefully be chocolate or a chocolate compound. Independent of any other legal definitions that may be used compositions of the invention that comprises a cocoa solids content of from 25% to 35% by weight together with a milk ingredient (such as milk powder) may be informally referred to herein as milk chocolate' (which term also encompasses other analogous chocolate products, with similar amounts of cocoa-solids or replacements therefor). Independent of any other legal definitions that may be used compositions of the invention that comprises a cocoa solids content of more than 35% by weight (up to 100% (i.e. pure cocoa solids) may be informally referred to herein as 'dark chocolate' (which term also encompasses other analogous chocolate products, with similar amounts of cocoa-solids or replacements therefor).

The term 'chocolate' as used herein denotes any product (and/or component thereof if it would be a product) that meets a legal definition of chocolate in any jurisdiction and also include product (and/or component thereof) in which all or part of the cocoa butter (CB) is replaced by cocoa butter equivalents (CBE) and/or cocoa butter replacers (CBR).

The term 'chocolate compound' as used herein (unless the context clearly indicates otherwise) denote chocolate-like analogues characterized by presence of cocoa solids (which include cocoa liquor/mass, cocoa butter and cocoa powder) in any amount, notwithstanding that in some jurisdictions compound may be legally defined by the presence of a minimum amount of cocoa solids.

The term 'chocolate product' as used herein denote chocolate, compound and other related materials that comprise cocoa butter (CB), cocoa butter equivalents (CBE), cocoa butter replacers (CBR) and/or cocoa butter substitutes (CBS). Thus, chocolate product includes products that are based on chocolate and/or chocolate analogues, and thus for example may be based on dark, milk or white chocolate.

Unless the context clearly indicates, otherwise it will also be appreciated that in the present invention, any one chocolate product may be used to replace any other chocolate product and neither the term chocolate nor compound should be considered as limiting the scope of the invention to a specific type of chocolate product. Preferred chocolate product comprises chocolate and/or compound, more preferred chocolate product comprises chocolate, most preferred chocolate product comprises chocolate as legally defined in a major jurisdiction (such as Brazil, EU and/or US).

The term 'choco-coating' as used herein (also refers to a 'choco-shell') denotes coatings made from any chocolate product. The terms 'chocolate coating' and 'compound coating' may be defined similarly by analogy. Similarly the terms 'choco-composition, (or mass)', 'chocolate composition (or mass)' and 'compound composition (or mass)' denote compositions (or masses) that respectively comprise chocolate product, chocolate and compound as component(s) thereof in whole or part. Depending on their component parts the definitions of such compositions and/or masses may of course overlap.

The term 'chocolate product confectionery as used herein denotes any foodstuff which comprises chocolate product and optionally also other ingredients and thus may refer to foodstuffs such confections, wafers, cakes and/or biscuits whether the chocolate product comprises a choco- coating and/or the bulk of the product. Chocolate product confectionery may comprise chocolate product in any suitable form for example as inclusions, layers, nuggets, pieces and/or drops. The confectionery product may further contain any other suitable inclusions such as crispy inclusions for example cereals (e.g. expanded and/or toasted rice) and/or dried fruit pieces.

The chocolate product of the invention may be used to mould a tablet and/or bar, to coat confectionery items and/or to prepare more complex confectionery products. Optionally, prior to its use in the preparation of a chocolate product confectionery product, inclusions according to the desired recipe may be added to the chocolate product. As it will be apparent to a person skilled in the art, in some instances the product of the invention will have the same recipe and ingredients as the corresponding composition and/or mass while in other instances, particularly where inclusions are added or for more complex products, the final recipe of the product may differ from that of the composition and/or mass used to prepare it.

In one strongly preferred embodiment of the invention, the chocolate product confectionery product comprises a solid moulded choco-tablet, choco-bar and/or baked product surrounded by substantial amounts of chocolate product. These products are prepared for example by filling a mould with chocolate product and optionally adding inclusions and/or baked product therein to displace chocolate product from the mould (so-called wet shelling processes), if necessary further topping up the mould with chocolate product. For such strongly preferred products of the invention the chocolate product forms a substantial or whole part of the product and/or a thick outside layer surrounding the interior baked product (such as a wafer and/or biscuit laminate). Such solid products where a mould is filled with chocolate are to be contrasted with products that comprise moulded thin chocolate shells which present different challenges. To prepare a thin-coated chocolate shell a mould is coated with a thin layer of chocolate, the mould being inverted to remove excess chocolate and/or stamped with a cold plunger to define the shell shape and largely empty the mould. The mould is thus coated with a thin layer of chocolate to which further ingredients and fillings may be added to form the interior body of the product.

Unless the context herein clearly indicates, otherwise it will also be well understood by a skilled person that the term chocolate product confectionery as used herein can readily be replaced by and is equivalent to the term chocolate confectionery as used throughout this application and in practice these two terms when used informally herein are interchangeable. However, where there is a difference in the meaning of these terms in the context given herein, then chocolate confectionery and/or compound confectionery are preferred embodiments of the chocolate product confectionery of the present invention, a preferred embodiment being chocolate confectionery.

Preferred chocolate product confectionery may comprise one or more -ingredients, for example selected from the group consisting of: chocolate product(s), compound product(s), chocolate coating(s) and/or compound coating(s). The products may comprise uncoated products such as choco-bar(s) and/or choco-tablet(s) with or without inclusions and/or products coated with chocolate product such as coated biscuits, cakes, wafers and/or other confectionery items. More preferably and/or alternatively any of the aforementioned may comprise one or more cocoa butter replacer(s) (CBR), cocoa-butter equivalent(s) (CBE), cocoa-butter substitute(s) (CBS) and/or any suitable mixture(s) thereof.

In chocolate product confectionery, the cocoa butter (CB) may be replaced by fats from other sources. Such products may generally comprise one or more fat(s) selected from the group consisting of: lauric fat(s) (e.g. cocoa butter substitute (CBS) obtained from the kernel of the fruit of palm trees); non-lauric vegetable fat(s) (e.g. those based on palm or other specialty fats); cocoa butter replacer(s) (CBR); cocoa butter equivalent(s) (CBE) and/or any suitable mixture(s) thereof. Some CBE, CBR and especially CBS may contain primarily saturated fats and very low levels of unsaturated omega three and omega six fatty acids (with health benefits). Thus in one embodiment in chocolate product confectionery of the invention such types of fat are less preferred than CB.

One embodiment of the invention provides a multi-layer product optionally comprising a plurality of layers of baked foodstuff (preferably selected from one or more wafer and/or biscuit layers, and/or one or more fillings layers there between with at least one coating layer located around these layers foodstuff, the coating comprising a chocolate product of or prepared according to the invention.

A further embodiment of the invention provides a chocolate product confectionery product, further coated with chocolate (or equivalents thereof, such as compound) for example a praline, chocolate shell product and/or chocolate coated wafer or biscuit any of which may or may not be layered. The chocolate coating can be applied or created by any suitable means, such as enrobing or moulding. The coating may comprise a chocolate product of or prepared according to the invention.

Another embodiment of the invention provides a chocolate product confectionery product of and/or used in the present invention, that comprises a filling surrounded by an outer layer for example a praline, chocolate shell product.

In another preferred embodiment of the invention the foodstuff comprises a multi-layer coated chocolate product comprising a plurality of layers of wafer, chocolate product, biscuit and/or baked foodstuff, with filling sandwiched between them, with at least one layer or coating being a chocolate product (e.g. chocolate) of the invention. Most preferably the multi-layer product comprises a chocolate product confectionery product (e.g. as described herein) selected from sandwich biscuit(s), cookie(s), wafer(s), muffin(s), extruded snack(s) and/or praline(s). An example of such a product is a multilayer laminate of baked wafer and/or biscuit layers sandwiched with filling(s) and coated with chocolate.

Baked foodstuffs used in the invention may be sweet or savoury. Preferred baked foodstuffs may comprise baked grain foodstuffs which term includes foodstuffs that comprise cereals and/or pulses. Baked cereal foodstuffs are more preferred, most preferably baked wheat foodstuffs such as wafer(s) and/or biscuit(s). Wafers may be flat or shaped (for example into a cone or basket for ice-cream) and biscuits may have many different shapes, though preferred wafer(s) and/or biscuit(s) are flat so they can be usefully be laminated together with a confectionery filling of the invention (and optionally a fruit based filling). More preferred wafers are non-savoury wafers, for example having a sweet or plain flavour.

A non-limiting list of those possible baked foodstuffs that may comprise chocolate compositions that comprise chocolate product of and/or used in the present invention are selected from: high fat biscuits, cakes, breads, pastries and/or pies; such as from the group consisting of: ANZAC biscuit, biscotti, flapjack, kurabiye, lebkuchen, leckerli, macroon, bourbon biscuit, butter cookie, digestive biscuit, custard cream, extruded snacks, florentine, garibaldi gingerbread, koulourakia, kourabiedes, Linzer torte, muffin, oreo, Nice biscuit, peanut butter cookie, polvorón, pizzelle, pretzel, croissant, shortbread, cookie, fruit pie (e.g. apple pie, cherry pie), lemon drizzle cake, banana bread, carrot cake, pecan pie, apple strudel, baklava, berliner, bichon au citron and/or similar products.

### Ranges

In the discussion of the invention herein, unless stated to the contrary, the disclosure of alternative values for the upper and lower limit of the permitted range of a parameter coupled with an indicated that one of said values is more preferred than the other, is to be construed as an implied statement that each intermediate value of said parameter, lying between the more preferred and less preferred of said alternatives is itself preferred to said less preferred value and also to each less preferred value and said intermediate value. For all upper and/or lower boundaries of any parameters given herein, the boundary value is included in the value for each parameter unless stated otherwise, i.e. "less than" means "less than and including" and "greater than" means "greater than and including" but "less than and not including" means the boundary value is not included. It will also be understood that all combinations of preferred and/or intermediate minimum and maximum boundary values of the parameters described herein in various embodiments of the invention may also be used to define alternative ranges for each parameter for various other embodiments and/or preferences of the invention whether or not the combination of such values has been specifically disclosed herein.

### Percentages

Unless otherwise specified % in the present description correspond to wt.%

It will be understood that the total sum of any quantities expressed herein as percentages cannot (allowing for rounding errors) exceed 100%. For example, the sum of all components of which the composition of the invention (or part(s) thereof) comprises may, when expressed as a weight (or other) percentage of the composition (or the same part(s) thereof), total 100% allowing for rounding errors. However, where a list of components is non exhaustive the sum of the percentage for each of such components may be less than 100% to allow a certain percentage for additional amount(s) of any additional component(s) that may not be explicitly described herein.

The term "comprising" as used herein will be understood to mean that the list following is non exhaustive and may or may not include any other additional suitable items, for example one or more further feature(s), component(s), ingredient(s) and/or substituent(s) as appropriate. Thus the words "comprise", "comprising" and the like are to be construed in an inclusive sense as opposed to an exclusive or exhaustive sense; that is to say, in the sense of "including, but not limited to". It should be noted that embodiments and features described in the context of one of the aspects of the present invention also apply to the other aspects of the invention.

The invention will now be described in further details in the following non-limiting examples. The following Examples are provided of illustrative purposes only and they are not to be considered in any way limiting to the scope of the present invention.

It should be understood that various changes and modifications to the presently preferred embodiments described herein will be apparent to those skilled in the art. Such changes and modifications can be made without departing from the scope of the present invention and without diminishing its attendant advantages. It is therefore intended that such changes and modifications be covered by the appended claims.

### Experimental Section

### Determination of Crystallinity

The crystallinity of the particles was measured using NMR. An Oxford Instruments, MQC+ NMR analyser was used with 26*200mm tubes and the following method: make a graduation 2 cm from the bottom of the tube, introduce the product to be analyzed until the graduation and note the mass of product, close the tube with a rubber stopper, place the tube in an oven at 40 ° C for 30 min minimum. The tube is then placed in the analyser.

Calibration is performed with pure materials. The quantity of crystalline sugar is then obtained present in the 2 cm sample in the tube. The crystalline sugar level is determined using an inverted recovery NMR pulse sequence. The spectral intensity is calculated by Laplace inverse transform using a least algorithm squares and an ideal magnetization decay core with T1 values between 0.1 and 5000 mS.

### Particle size

The particle size values of powders was measured by digital image analysis using a Camsizer XT (Retsch Technology GmbH, Germany). The technique of digital image analysis is based on the computer processing of a large number of sample's pictures taken at a frame rate of 277 images/seconds by two different cameras, simultaneously.

This technique is used to measure a particle size distributions of the skimmed milk powder particles.

The particle size for the fat based confectionery products was measured using a Mastersizer 2000 (Malvern Panalytical). 0.2 g of the sample being tested is mixed in 20 ml of MCT oil at 40-50°C for 1h and, if necessary, the sample is placed in an ultrasonic bath for 2 minutes to disperse.

### Examples

The following examples are illustrative of the products and methods of making the same falling within the scope of the present invention. They are not to be considered in any way limitative of the invention. Changes and modifications can be made with respect to the invention. That is the skilled person will recognise many possible variations in these examples covering a wide range of compositions, ingredients, processing methods and mixtures and can adjust the naturally occurring levels of the compounds of the invention for a variety of applications.

### Example 1

Preparation of the crystalline milk particles of the present invention

| Ingredients | Amount (wt.%) |
|---|---|
| Water demineralised | 46.5 |
| Skimmed milk powder | 52.9 |
| Crystalline lactose monohydrate | 0.53 |

The skimmed milk powder is mixed at room temperature until full dissolution in the water. After a pre-heating at 65 deg C, the lactose monohydrate seed crystal is added and then the solution is immediately spray-dried using a spray drier according to the parameters listed in the table below:

| Spray-drying parameters | |
|---|---|
| Nozzle | Bi-fluid Nozzle |
| Inlet air temperature | 130 deg C |
| Output temperature | 80 deg C |
| Drying Air Flowrate | 400 m³ |
| Air Pressure | 2 bar |
| Product Flowrate | 9 L/h |

The particles had a D90 of 140.2 microns, a D50 of 58.1 microns, and a D10 of 22.8 microns

The crystallinity was measured using NMR and found to be 50.26% by weight crystalline sugar based on the total weight of the particles.

Chocolate compositions were prepared using the following standard recipe and technique.

195 g skimmed milk powder (42.6%), 130 g crystalline sucrose (28.4%), 68 g cocoa mass (14.8%), 20 g milk fat (4.4%), 0.1 g vanillin and 45 g melted cocoa butter (9.8%) are mixed in a metal bowl with a metal spoon to form a chocolate base mass. Once a visually homogeneous mix is obtained, the mass is refined by passing it twice between the rolls of a 3-roll-refiner (Exakt, Haslach GmbH) at a gap width of 30 microns. In parallel, 45 g cocoa butter are melted in an oven at 60°C. The liquid cocoa butter is then added to the refined mix, which is transferred into the bowl of a Kenwood kitchen mixer (Cooking chef Major), equipped with a temperature control of the bowl, set to 50°C. Using a scraper with silicon tip, the Kenwood mixer serves as conche for the chocolate mas, continuously shearing and mixing it for a period of two hours. After 110 minutes of conching, 2.2 g of lecithin are added to liquefy the mass. After conching the chocolate mass is tempered. In order to ensure a controlled crystallization, the temperature is gradually reduced from 50°C to 34°C to 28°C with the help of a Chocovision Rev2 tempering machine. Chocolate moulds are held at 28°C in a climatic chamber, before filling them with the tempered chocolate mass. After cooling at room temperature, the solid chocolate is unmoulded and packed in air-tight aluminium sachets.

### Example 2

Chocolate compositions were made according to the above standard process with the following different amounts of materials (in wt.%).

Example 2 was prepared by the process of Example 1 was used with the exception that a 3 roll refiner was used with three passes, the first pass was at a gap of 100 microns, second pass at a gap of 80 microns and a third pass with a gap of 60 microns.

The particle size was measured by the above method was D90 of 54 microns and specific surface area of 0.825 m²/g.

| Example | Amorphous skimmed milk powder | Amorphous Sugar/ WO2017093309, Example 6, D | Sucrose | Skimmed Milk Powder - Nestle Alegria, 49.90wt.% crystalline sugar | Skimmed Milk Powder - Nestle Milano, 38.66wt.% crystalline sugar | Milk Powder of Ex. 1 | Cocoa butter | Milk fat | Cocoa Mass | Lecithin and/or Vanillin (if present, 0.02 unless otherwise specified) |
|---|---|---|---|---|---|---|---|---|---|---|
| Reference 1 | 15.55 | | 49.14 | | | | 17.33 | 3.92 | 13.61 | 0.46 (both) |
| Reference 2 | 9.55 | | 49.14 | | | | 15.58 | 3.92 | 21.71 | 0.46 |
| Reference 3 | 15.55 | 44.45 | 22.0 | | 4.46 | | 17.33 | 3.92 | 13.61 | 0.46 |
| Example 1a | | | 25.7 | | | 38.6 | 17.8 | 3.96 | 13.46 | 0.46 |
| Example 1b | | 22.5 | 3.5 | | | 38.7 | 17.33 | 3.92 | 13.61 | 0.42 |
| Example 2 | | | 19.65 | 38.68 | | | 15.58 | 3.92 | 21.71 | 0.68 (both) |
| Example 3 | 15.55 | 19.45 | 10.22 | | 19.46 | | 17.33 | 3.92 | 13.61 | 0.46 (both) |
| Example 4 | 15.55 | 24.45 | 8.22 | | 16.46 | | 17.33 | 3.92 | 13.61 | 0.46 (both) |
| Example 5 | | 22.50 | 9.00 | | 33.18 | | 17.33 | 3.92 | 13.61 | 0.46 (both) |
| Example 6 | 15.55 | 20.76 | 4.22 | | 24.15 | | 17.33 | 3.92 | 13.61 | 0.46 (both) |
| Example 7 | | | 12.52 | | 52.16 | | 17.33 | 3.92 | 13.61 | 0.02 (vanillin) |
| Example 8 | | | 18.00 | | 46.68 | | 17.33 | 3.92 | 13.61 | 0.46 (both) |
| Example 9 | 31.31 | | 12.52 | | 20.85 | | 17.33 | 3.92 | 13.61 | 0.46 (both) |
| Example 10 | | 22.55 | 3.5 | 38.63 | | | 17.33 | 3.92 | 13.61 | 0.46 (both) |
| Example 11 | | 22.55 | 3.5 | | 38.63 | | 17.33 | 3.92 | 13.61 | 0.46 (both) |

| Example | Non-fat milk solids/ wt.% | % of Non-fat milk solids crystalline | Amorphous Content/ wt.% | Sugar Reduction per 100g/ wt.% | Fat content/ wt.% | D90/ micron | Amount of Particles under 10 microns/ wt.% | Specific Surface Area/ m²/g | | |
|---|---|---|---|---|---|---|---|---|---|---|
| Reference 1 | 15.55 | 0 | 15.55 | 0 | 29 | 48 | 41 | 0.829 | | |
| Reference 2 | 9.55 | 0 | 9.55 | 5.54 | 31.7 | 63 | Not measured | 0.737 | | |
| Reference 3 | 46.68 | 9.55 | 62.74 | 25.52 | 29.0 | 51 | 25 | 0.618 | | |
| Example 1a | 38.60 | 100 | 19.72 | 19.56 | 29.4 | Not measured | Not measured | Not measured | | |
| Example 1b | 52.16 | 74.0 | 42 | 30.00 | 29 | 60 | 38 | 0.83 | | |
| Example 2 | 38.68 | 100 | 19.38 | 30.00 | 32 | 54 | Not measured | 0.825 | | |
| Example 3 | 46.68 | 41.69 | 46.94 | 25.52 | 29 | 54 | 31 | 0.689 | | |
| Example 4 | 46.68 | 35.26 | 50.10 | 25.52 | 29 | 52 | 31 | 0.685 | | |
| Example 5 | 46.68 | 71.08 | 42.85 | 25.52 | 29 | 46 | 25 | 0.783 | | |
| Example 6 | 52.16 | 46.30 | 51.12 | 30.00 | 29 | 62 | 29 | 0.661 | | |
| Example 7 | 52.16 | 100 | 31.99 | 30.00 | 29 | 46 | 41 | 0.899 | | |
| Example 8 | 46.68 | 100 | 28.63 | 25.52 | 29 | 55 | 36 | 0.777 | | |
| Example 9 | 52.16 | 39.97 | 44.10 | 30.00 | 29 | 56 | 32 | 0.703 | | |
| Example 10 | 52.16 | 74.06 | 41.90 | 30.00 | 29 | 75 | 31 | 0.680 | | |
| Example 11 | 52.16 | 74.06 | 46.11 | 30.00 | 29 | 81 | 27 | 0.614 | | |

The amorphous content was calculated based on the contents of any of the following components that are present: amorphous skimmed milk powder, amorphous sugar, and amorphous content of crystalline milk powder.

### Example 12

A sensory panel (n=12) was trained following a standard Quantitative Descriptive Analysis procedure on a standard sensory glossary used for plain milk chocolates gathering both Flavor and texture attributes:

| **Attribute name** | **Definition** |
|---|---|
| **TX_WP_Hard** | Strength required to break the product, in the first bite |
| **TX_WP_Crumbly** | Degree to which the product stays in one piece or breaks into pieces, by the three first chews |
| **TX_WP_Dry** | Product that breaks into bits when chewed (dry) as opposed to a product that forms a paste (moist) |
| **TX_WP_Gritty** | The perception of particle size as evaluated between the tongue and palate or between the tongue and teeth while chewing |
| **TX_WP_Pasty** | The degree to which the sample turns into a thick paste that is difficult to dissolve and remove from the palate |
| **TX_WP_Sticky** | Extent to which the product sticks to the teeth or palate during biting and chewing or during movement in the mouth |
| **TX_WP_Mouthcoating** | Describes the perception of a fat film coating/enrobing the mouth, just after swallowing |
| **FL_WP_Sweet** | Intensity of the basic taste characterized by solutions of sucrose |
| **TX_WP_Melting time** | Time necessary for the product to melt in mouth. |
| **TX_WP_Astringent** | Intensity of the basic taste characterized by solutions of Tannic acid |

During the evaluation of each sample, the panellists were instructed to rate the intensity of each attribute presented in the sensory glossary. The perceived magnitudes were recorded on visual analog structured scale varying from 0 to 10 and the samples were presented in a monadic way (one at a time) to the panellists. In order to avoid saturation effect, a maximum of 5 products were evaluated for each single session with 5 minutes pause between the samples during which panellists were provided with freshly opened Acqua Panna water as palate cleaner. Monadic profiling data were collected using Fizz software (Biosystèmes, France) in individual sensory booths. An analysis of variance (ANOVA, two-way, Product fixed and Judge random) was performed for each sensory attribute to determine whether there are some significant differences among products. In addition, a Fischer's LSD multiple paired comparison has been applied to identify the products that are different from each other.

Examples 3 to 5 and Example 8 and Reference Example 3 were tasted and compared against Reference 1 as the standard.

Reference 3 was found to be the most pasty and gritty. Examples 3 and 5 were found to be less gritty and of limited pastiness and Example 4 less pasty. Accordingly, as the crystallinity increases, the pastiness of the product decreases.

### Example 13

Example 2 was compared relative to Reference 2. Following the results of the trial in Example 12, an acceptable pasty score was set at 2.5, i.e. anything higher was deemed unacceptable.

Following an informal tasting with 12 experienced tasters, Reference 2 was found to have a score of 0.8 and Example 2 a score of 1.5 and not be gritty. Accordingly, the increase in crystallinity and control of particle size was shown to decrease pastiness and control grittiness.

### Example 14

Examples 6, 10 and 11 were tasted by a panel of 12. It was found that the degree of pastiness decreased as the amorphous content decreased for these examples.

### Example 15

The procedure of Example 12 was followed but the samples were assessed on just pastiness, grittiness and sweetness.

Examples 3-6, 8 and 9 and References 1 and 3 were assessed.

After Reference 1, Example 8 was the least pasty showing that the impact of amorphous and % non-fat crystalline milk solids contents on the pastiness.

Again, Reference 3 was significantly the most pasty, even with a low amount of less than 10 micron particles, owing to the high amorphous content.

Examples 3, 4 and 6 were comparable in pastiness showing the interplay between crystallinity and particle size distribution on organoleptic properties.

There was less variance in grittiness. References 1 and 3 were the sweetest with the other examples being less sweet.

Exmaples 10 and 11 were asssesed separately using the same procedure. Example 11 was found to be slightly more pasty than Example 10 owing to the increase in amorphous content and particles below 10 microns.

## Claims

1. Fat based confectionery material comprising at least 35 % non-fat milk solids on a dry weight basis wherein at least 20 % of the non-fat milk solids are in the form of crystallized or partially crystallized milk powder, wherein at least 50% of the lactose comprised within the crystallized or partially crystallized milk powder is crystalline.

2. A fat based confectionery material according to claim 1, wherein the crystallized or partially crystallized milk powder is a skimmed milk powder.

3. A fat based confectionery material according to claim 1 or claim 2 comprising at least 10 wt.% amorphous sucrose.

4. A fat based confectionery material according to claim 3, wherein the amorphous sucrose is in the form of amorphous particles comprising sucrose, a bulking agent and optionally a surfactant.

5. A fat based confectionery material according to claim 3 or 4 wherein the amorphous sucrose is in the form of amorphous particles comprising sucrose and skimmed milk.

6. A fat based confectionery material according to any one of claims 1 to 5, wherein less than 50 wt.% of the fat based confectionery material is amorphous.

7. A fat based confectionery material according to any one of claims 1 to 6, wherein 0wt.% or greater and less than 25 wt.% of the fat based confectionery material is amorphous.

8. A fat based confectionery material according to any one of claims 1 to 7, wherein the confectionery product of the present invention comprises particles with a D90 particle size from 35 to 90 microns or preferably from 45 to 75 microns.

9. A fat based confectionery material according to any one of claims 1 to 8, wherein at least 70% by weight of the non-fat milk solids are in the form of crystallized or partially crystallized milk powder.

10. A fat based confectionery material according to any one of claims 1 to 9, wherein at least 80% of the lactose comprised within the crystallized or partially crystallized milk powder is crystalline by weight of the lactose.

11. A fat based confectionery material according to any one of claims 1 to 10 comprising cocoa butter.

12. A fat based confectionery material according to any one of claims 1 to 11, wherein the confectionery material is a milk chocolate or a white chocolate.

13. A method of manufacturing a fat based confectionery material comprising at least 35% non-fat milk solids on a dry weight basis wherein at least 20 % of the non-fat milk solids are in the form of crystallized or partially crystallized milk powder, wherein at least 50% of the lactose comprised within the crystallized or partially crystallized milk powder is crystalline, the method comprising
mixing crystallized or partially crystallized milk powder with fat and optionally ingredients selected from the group consisting of cocoa liquor, crystalline sugar, lecithin and combinations of these; optionally refining the resulting mixture to reduce the particle size of the components; and mixing the refined mixture with further fat and optionally lecithin and liquefying.

14. A method according to claim 13 wherein the crystallized or partially crystallized milk powder is obtained by mixing amorphous spray-dried milk powder with water followed by heating and mixing the mixture at 55 to 90° C and then pulverizing the mixture.

## Patentansprüche

1. Süßwarenmaterial auf Fettbasis, umfassend mindestens 35 % fettfreie Milchfeststoffe auf einer Trockengewichtsbasis, wobei mindestens 20 % der fettfreien Milchfeststoffe in Form von kristallisiertem oder teilweise kristallisiertem Milchpulver vorliegen und mindestens 50 % der Laktose, die innerhalb des kristallisierten oder teilweise kristallisierten Milchpulvers enthalten ist, kristallin ist.

2. Süßwarenmaterial auf Fettbasis nach Anspruch 1, wobei das kristallisierte oder teilweise kristallisierte Milchpulver ein Magermilchpulver ist.

3. Süßwarenmaterial auf Fettbasis nach Anspruch 1 oder 2, umfassend mindestens zu 10 Gew.-% amorphe Sucrose.

4. Süßwarenmaterial auf Fettbasis nach Anspruch 3, wobei die amorphe Sucrose in Form von amorphen Partikeln vorliegt, umfassend Sucrose, ein Füllstoff und optional ein Tensid.

5. Süßwarenmaterial auf Fettbasis nach Anspruch 3 oder 4, wobei die amorphe Sucrose in Form amorpher Partikel vorliegt, umfassend Sucrose und Magermilch.

6. Süßwarenmaterial auf Fettbasis nach einem der Ansprüche 1 bis 5, wobei weniger als 50 Gew.-% des Süßwarenmaterials auf Fettbasis amorph sind.

7. Süßwarenmaterial auf Fettbasis nach einem der Ansprüche 1 bis 6, wobei 0 Gew.-% oder mehr und weniger als 25 Gew.-% des Süßwarenmaterials auf Fettbasis amorph sind.

8. Süßwarenmaterial auf Fettbasis nach einem der Ansprüche 1 bis 7, wobei das Süßwarenprodukt der vorliegenden Erfindung Partikel mit einer D90-Partikelgröße von 35 bis 90 Mikrometer oder vorzugsweise von 45 bis 75 Mikrometer umfasst.

9. Süßwarenmaterial auf Fettbasis nach einem der Ansprüche 1 bis 8, wobei mindestens 70 Gew.-% der fettfreien Milchfeststoffe in Form von kristallisiertem oder teilweise kristallisiertem Milchpulver vorliegen.

10. Süßwarenmaterial auf Fettbasis nach einem der Ansprüche 1 bis 9, wobei mindestens 80 % der Laktose, die innerhalb des kristallisierten oder teilweise kristallisierten Milchpulvers enthalten ist, bezogen auf das Gewicht der Laktose, kristallin ist.

11. Süßwarenmaterial auf Fettbasis nach einem der Ansprüche 1 bis 10, umfassend Kakaobutter.

12. Süßwarenmaterial auf Fettbasis nach einem der Ansprüche 1 bis 11, wobei das Süßwarenmaterial eine Milchschokolade oder eine weiße Schokolade ist.

13. Verfahren zum Herstellen eines Süßwarenmaterials auf Fettbasis, umfassend mindestens 35 % fettfreie Milchfeststoffe auf einer Trockengewichtsbasis, wobei mindestens 20 % der fettfreien Milchfeststoffe in Form von kristallisiertem oder teilweise kristallisiertem Milchpulver vorliegen, wobei mindestens 50 % der Laktose, die innerhalb des kristallisierten oder teilweise kristallisierten Milchpulvers enthalten ist, kristallin ist, das Verfahren umfassend
Mischen von kristallisiertem oder teilweise kristallisiertem Milchpulver mit Fett und optional Zutaten, die aus der Gruppe ausgewählt sind, bestehend aus Kakaomasse, kristallinem Zucker, Lecithin und Kombinationen davon; optionales Walzen der resultierenden Mischung, um die Partikelgröße der Komponenten zu verringern; und Mischen der gewalzten Mischung mit weiterem Fett und optional Lecithin und Verflüssigen.

14. Verfahren nach Anspruch 13, wobei das kristallisierte oder teilweise kristallisierte Milchpulver durch Mischen von amorphem sprühgetrocknetem Milchpulver mit Wasser, gefolgt von Erhitzen und Mischen der Mischung bei 55 bis 90 °C und anschließendes Pulverisieren der Mischung erhalten wird.

## Revendications

1. Matière pour confiserie à base de graisse comprenant au moins 35 % d'extrait sec dégraissé de lait sur la base du poids à sec, dans laquelle au moins 20 % de l'extrait sec dégraissé du lait se présentent sous la forme de poudre de lait cristallisée ou partiellement cristallisée, dans laquelle au moins 50 % du lactose contenu dans la poudre de lait cristallisée ou partiellement cristallisée sont cristallins.

2. Matière pour confiserie à base de graisse selon la revendication 1, dans laquelle la poudre de lait cristallisée ou partiellement cristallisée est une poudre de lait écrémé.

3. Matière pour confiserie à base de graisse selon la revendication 1 ou la revendication 2 comprenant au moins 10 % en poids de saccharose amorphe.

4. Matière pour confiserie à base de graisse selon la revendication 3, dans laquelle le saccharose amorphe se présente sous la forme de particules amorphes comprenant du saccharose, un agent gonflant et éventuellement un agent tensioactif.

5. Matière pour confiserie à base de graisse selon la revendication 3 ou 4 dans laquelle le saccharose amorphe se présente sous la forme de particules amorphes comprenant de la saccharose et du lait écrémé.

6. Matière pour confiserie à base de graisse selon l'une quelconque des revendications 1 à 5, dans laquelle moins de 50 % en poids de la matière pour confiserie à base de graisse sont amorphes.

7. Matière pour confiserie à base de graisse selon l'une quelconque des revendications 1 à 6, dans laquelle 0 % en poids ou plus et moins de 25 % en poids de la matière pour confiserie à base de graisse sont amorphes.

8. Matière pour confiserie à base de graisse selon l'une quelconque des revendications 1 à 7, dans laquelle le produit de confiserie de la présente invention comprend des particules ayant une taille de particules D90 de 35 à 90 micromètres ou de préférence de 45 à 75 micromètres.

9. Matière pour confiserie à base de graisse selon l'une quelconque des revendications 1 à 8, dans laquelle au moins 70 % en poids de l'extrait sec dégraissé de lait se présentent sous la forme de poudre de lait cristallisée ou partiellement cristallisée.

10. Matière pour confiserie à base de graisse selon l'une quelconque des revendications 1 à 9, dans laquelle au moins 80 % du lactose compris dans la poudre de lait cristallisée ou partiellement cristallisée sont cristallins en poids du lactose.

11. Matière pour confiserie à base de graisse selon l'une quelconque des revendications 1 à 10 comprenant du beurre de cacao.

12. Matière pour confiserie à base de graisse selon l'une quelconque des revendications 1 à 11 dans laquelle la matière pour confiserie est du chocolat au lait ou du chocolat blanc.

13. Procédé de fabrication d'une matière pour confiserie à base de graisse comprenant au moins 35 % d'extrait sec dégraissé de lait sur la base du poids à sec dans lequel au moins 20 % de l'extrait sec dégraissé du lait se présentent sous la forme de poudre de lait cristallisée ou partiellement cristallisée, dans lequel au moins 50 % du lactose contenu dans la poudre de lait cristallisée ou partiellement cristallisée sont cristallins, le procédé comprenant
le mélange de poudre de lait cristallisée ou partiellement cristallisée avec de la graisse et éventuellement des ingrédients choisis dans le groupe constitué par la masse de cacao, le sucre cristal, la lécithine et des combinaisons de ceux-ci ; éventuellement le raffinage du mélange obtenu pour réduire la taille de particules des composants ; et le mélange du mélange raffiné avec de la graisse supplémentaire et éventuellement de la lécithine et une liquéfaction.

14. Procédé selon la revendication 13 dans lequel la poudre de lait cristallisée ou partiellement cristallisée est obtenue en mélangeant de la poudre de lait amorphe séchée par atomisation avec de l'eau, puis en chauffant et en mélangeant le mélange à 55 jusqu'à 90 °C et en pulvérisant le mélange.
